## Europäisches Patentamt

## European Patent Office

## Office européen des brevets

(19)

(11) Numéro de publication: **0 080 416**
**B1**

(12) # FASCICULE DE BREVET EUROPEEN

(45) Date de publication du fascicule du brevet:
**23.10.85**

(51) Int. Cl.⁴: **B 25 J 3/04**, B 25 J 19/00

(21) Numéro de dépôt: **82402121.6**

(22) Date de dépôt: **22.11.82**

(54) **Dispositif d'actionnement et son application à un asservissement de position pour un télémanipulateur maître-esclave.**

(30) Priorité: **24.11.81 FR 8121968**

(43) Date de publication de la demande:
**01.06.83 Bulletin 83/22**

(45) Mention de la délivrance du brevet:
**23.10.85 Bulletin 85/43**

(84) Etats contractants désignés:
**DE GB**

(56) Documents cités:
**DE - C - 385 792**
**FR - A - 2 112 214**
**FR - A - 2 297 698**
**US - A - 1 946 100**
**US - A - 3 921 445**
**US - A - 4 046 262**

(73) Titulaire: **LA CALHENE Société Anonyme, 5, rue Emile Zola, F-95870 Bezons (FR)**

(72) Inventeur: **Francois, Daniel, 227, rue des Ruelles, F-41100 Vendome (FR)**
Inventeur: **Mercey, Gilles, 14, route d'Azé, F-41100 Vendome (FR)**
Inventeur: **Lepissier, Jean Jacques, 14, rue de Gascogne, F-41100 Vendome (FR)**

(74) Mandataire: **Mongrédien, André et al, c/o BREVATOME 25, rue de Ponthieu, F-75008 Paris (FR)**

BUNDESDRUCKEREI BERLIN

## Description

La présente invention se rapporte à un dispositif d'actionnement et à son application à un asservissement de position pour commander l'un quelconque des mouvements de positionnement et d'orientation du bras maître ou du bras esclave d'un télémanipulateur maître-esclave. Un tel dispositif comportant des caractéristiques du préambule de la revendication 1 est divulgué par le brevet US-A-4 046 262.

De façon plus précise, l'invention se rapporte à un dispositif d'actionnement pouvant être utilisé à la place de chacun des dispositifs d'actionnement à câbles ou à rubans utilisés actuellement et permettant notamment de réaliser un bras maître miniaturisé présentant les mêmes caractéristiques de réversibilité qu'un bras maître actionné par des dispositifs à câbles ou à rubans.

On sait que les dispositifs d'actionnement à câbles ou à rubans utilisés actuellement présentent l'avantage essentiel d'être mécaniquement réversibles, c'est-à-dire qu'ils permettent aussi bien la transmission au bras esclave d'un mouvement du bras maître que la transmission au bras maître d'une résistance rencontrée par le bras esclave, lorsque le télémanipulateur est à retour d'effort. En revanche, ces dispositifs présentent un certain nombre d'inconvénients, parmi lesquels les deux principaux sont l'encombrement résultant notamment de la présence de moufles réalisant la réduction pour un mouvement donné et la fragilité des câbles et des rubans qui nécessite une maintenance fréquente.

Le premier de ces inconvénients empêche d'envisager l'utilisation de ces dispositifs classiques lorsque les conditions d'utilisation du manipulateur imposent, par exemple, une miniaturisation du bras maître. Tel est notamment le cas lorsque le télémanipulateur est destiné à effectuer des télémanipulations sous-marines et lorsqu'il est commandeé à partir d'un véhicule sous-marin de faible encombrement, dans lequel l'espace disponible pour le bras maître peut être par exemple limité à une portion de sphère de 50 cm de diamètre.

En ce qui concerne la fragilité des câbles ou des rubans, elle introduit des contraintes d'exploitation qui sont contraignantes au niveau du bras esclave, notamment lorsque le télémanipulateur est utilisé dans le domaine nucléaire. En effet, il est alors nécessaire de procéder à une décontamination du bras esclave ou à sa réparation en milieu irradié, ce qui entraîne dans tous les cas une servitude d'exploitation.

La présente invention a précisément pour objet la réalisation d'un dispositif d'actionnement ne présentant pas les inconvénients des dispositifs à câbles ou à rubans, tout en assurant une réversibilité des mouvements permettant de réaliser un télémanipulateur à retour d'effort.

A cet effet, et conformément à l'invention, on utilise un moteur électrique de faible encombrement et présentant une vitesse de sortie relativement importante et on lui adjoint un réducteur présentant un taux die réduction élevé, afin de satisfaire à la fois aux exigences d'encombrement et de force requises. Etant donné qu'un tel réducteur est peu ou pas réversible, il est nécessaire de restituer à ce mécanisme un caractère de bonne réversibilité en lui adjoignant des moyens appropriés. Conformément à l'invention, ces moyens sont des moyens de liaision mécanique flexibles angulairement et sensibles à l'effort appliqué, et des moyens pour détecter cet effort.

De façon plus précise, l'invention concerne un dispositif d'actionnement comprenant un boîtier, un moteur électrique dont le stator est fixé dans le boîtier, un mécanisme réducteur de vitesse logé dans le boîtier et dont la partie menante est entraînée par le rotor du moteur électrique et une pièce d'actionnement externe au boîtier, caractérisé en ce que ladite pièce d'actionnement est reliée à la partie menée du mécanisme réducteur par des moyens de liaision mécanique flexibles angulairement, et en ce qu'il comprend des moyens pour détecter un premier décalage angulaire entre la pièce d'actionnement et ladite partie menée, et des moyens pour détecter un deuxième décalage angulaire entre ladite partie menée et le boîtier.

Les moyens de liaision flexibles peuvent notamment être constitués par une barre de torsion ou par deux ressorts en spirale montés en opposition.

Conformément à un mode de réalisation préféré de l'invention, le dispositif d'actionnement comprend de plus un arbre tubulaire rigide disposé coaxialement autour de la barre de torsion pour relier la partie menée du mécanisme réducteur à plateau de référence dont les faces opposées sont placées respectivement en vis-à-vis d'une surface du boîtier et d'une surface de la pièce d'actionnement, le moyen pour détecter le premier et le deuxième décalages angulaires étant monté respectivement entre ladite surface de la pièce d'actionnement et la face correspondante du plateau et entre ladite surface du boîtier et la face correspondante du plateau.

L'invention concerne également une application à un asservissement de position pour un télémanipulateur maître-esclave comprenant un bras maître et un bras esclave définissant chacun plusieurs mouvements, caractérisé en ce que chaque mouvement d'au moins l'un des bras télémanipulateur est contrôlé par un dispositif d'actionnement et en ce que ledit asservissement comprend des troisièmes moyens pour détecter la position correspondant au même mouvement de l'autre bras, des quatrièmes moyens pour déterminer la différence entre les signaux délivrés par les deuxièmes moyens et les signaux délivrés par les troisièmes moyens et des cinquièmes moyens pour déterminer la différence entre les signaux délivrés par les quatrièmes moyens et les signaux délivrés par les premiers moyens, les signaux délivrés par ces cinquièmes moyens servant à commander ledit moteur électrique.

De préférence, cet asservissement comprend de plus des sixièmes moyens pour limiter à une valeur donnée le niveau des signaux transmis par les quatrièmes moyens aux cinquièmes moyens.

Selon une autre caractéristique de l'invention, chaque mouvement de l'autre bras est contrôlé par un second dispositif d'actionnement auquel sont associés lesdits troisièmes moyens et des huitièmes moyens pour déterminer l'effort exercé par ce second dispositif d'actionnement, et ledit asservissement comprend de plus des neuvièmes moyens pour déterminer la différence entre les signaux délivrés par les quatrièmes moyens et par les huitièmes moyens, les signaux délivrés par ces neuvièmes moyens servant à commander le second dispositif d'actionnement.

De préférence, l'asservissement selon l'invention comprend en outre des moyens pour limiter à une valeur donnée le niveau des signaux transmis par les quatrième moyens aux neuvièmes moyens.

On décrira maintenant, à titre d'exemple non limitatif, un mode de réalisation particulier de l'invention en se référant aux dessins annexés dans lesquels:

— la figure 1 est une vue en coupe longitudinale d'un dispositif d'actionnement réalisé conformément à la présente invention,

— les figures 2a et 2b illustrent le fonctionnement du mécanisme réducteur utilisé dans le dispositif de la figure 1,

—la figure 3 illustre une application du dispositif d'actionnement selon l'invention au contrôle des mouvements d'un bras maître miniaturisé assurant la commande à distance d'un bras esclave à commande hydraulique de dimensions normales, et

—la figure 4 montre un circuit d'asservissement pouvant être utilisé pour la commande de chacun des mouvements du télémanipulateur de la figure 3.

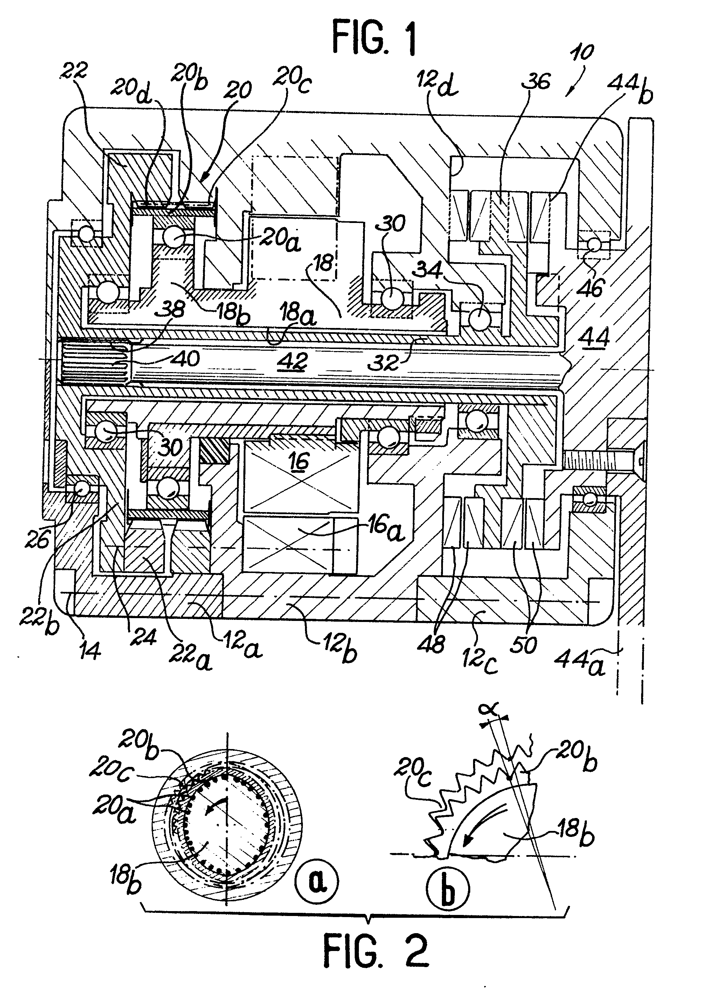

Sur la figure 1, on a représenté en partie basse la structure des différents organes du dispositif d'actionnement selon l'invention tels qu'ils peuvent être réalisés en pratique, alors qu'on a représenté de façon schématique en partie haute les différents ensembles constitués par ces organes.

Ainsi, on voit sur la figure 1, que le dispositif d'actionnement 10 selon l'invention comprend un boîtier cylindrique 12 constitué en réalité de trois pièces 12a, 12b et 12c empilées et assemblées par des tirants dont l'un est symbolisé par un trait mixte 14. Le stator 16a d'un moteur électrique relativement rapide est fixé dans la partie centrale 12b du boîtier 12. Le rotor 16 du moteur électrique est fixé sur une pièce 18 percée d'un alésage 18a et montée de façon tournante à l'intérieur du boîtier 12, autour de l'axe commun à ce dernier et à l'alésage 18a. Cette pièce 18 constitue la partie menante d'un mécanisme réducteur de vitesse 20 à fort taux de réduction. Ce mécanisme, qui sera décrit plus en détail ultérieurement, est peu ou pas réversible en raison de son fort taux de réduction. Il entraîne en rotation, à une vitesse relativement faible par rapport à celle de la partie menante 18, une couronne dentée 22a qui constitue l'un des éléments de la partie menée 22 de ce mécanisme. La partie menée 22 comprend en outre un flasque 22b sur lequel la couronne dentée 22a est fixée par des vis dont l'une est symbolisée par un trait mixte 24.

Le réducteur 20 ainsi que la partie menée 22 sont logés dans la pièce 12a qui ferme l'une des extrémités du boîtier. La partie menée 22 est montée de façon tournante à l'intérieur de cette pièce 12a par l'intermédiaire d'un roulement à billes 26.

Pour sa part, la partie menante 18 présente sensiblement la forme d'un arbre creux et s'étend à la fois à l'intérieur des parties 12a et 12b du boîtier. En outre, elle est supportée de façon tournante par l'une de ses extrémités dans le flasque 22b et par son extrémité opposée dans la partie 12b du boîtier, par l'intermédiaire de deux roulements à billes 30.

La partie menée 22 est solidaire d'un arbre tubulaire rigide 32 disposé coaxialement à l'intérieur de l'alésage 18a formé dans la partie menante. L'arbre tubulaire 32 traverse complètement la partie menants 18 et fait saillie à l'extrémité de cette dernière opposée au flasque 22b. Cette extrémité en saillie de l'arbre 32 est supportée de façon tournante par la partie 12b du boîtier, par l'intermédiaire d'un roulement à billes 34. En outre, elle se prolonge au-delà du roulement 34 pour former un plateau de réfrence 36 disposé dans la partie 12c du boîtier.

Au niveau du flasque 22b, l'arbre tubulaire rigide 32 comporte sur sa face interne des cannelures 38 dans lesquelles sont reçues des cannelures correspondantes 40 formées à l'extrémité d'une barre de torsion 42 disposée coaxialement à l'intérieur de l'arbre tubulaire 32. La barre de torsion 42 s'étend sur toute la longueur de l'arbre 32 et elle est solidaire, au-delà du plateau de référence 36, d'une pièce d'actionnement 44. Cette pièce d'actionnement 44 traverse une ouverture circulaire formée dans l'extrémité de la partie 12c du boîtier, et elle est supportée de façon tournante dans cette ouverture par un roulement à billes 46. La pièce 44 porte à l'extérieur du boîtier 12 un plateau d'actionnement 44a solidaire d'une partie de télémanipulateur mobile par rapport au boîtier.

La pièce d'actionnement 44 comprend également une partie en forme de plateau située à l'intérieur de la partie 12c du boîtier et définissant une surface 44b en vis-à-vis de l'une des faces du plateau de référence 36. L'autre face de ce plateau 36 est située en vis-à-vis d'une surface 12d formée sur la partie 12b du boîtier. La mesure de la rotation du plateau de référence 36 par rapport au boîtier est réalisée au moyen d'un premier potentiomètre 48 placé entre la surface 12d du boîtier et la face en vis-à-vis du plateau 36. De façon comparable, la rotation de la pièce d'actionnement 44 par rapport au plateau de référence 36 est détectée au moyen d'un potentiomètre 50 placé entre la surface 44b et la face en vis-à-vis du plateau 36. Les potentiomètres 48 et 50 pourraient être remplacés par tout autre système de codage de position tel que des codeurs optiques.

Grâce à cette disposition, on comprend que le potentiomètre 48 permet de mesurer le déplacement angulaire entre le plateau de référence 36 et le boîtier, c'est-à-dire lorsqu'aucun effort n'est appliqué sur la barre de torsion 42 le déplacement angulaire de la pièce 44 par rapport au boîtier. Le potentiomètre 48 indique donc la position de la pièce 44 par rapport au boîtier à la flexion angulaire de la barre de torsion près. Bien entendu, la barre de torsion 42 pourrait être remplacée par tout autre moyen de liaison mécanique entre la partie menée 22 et la pièce 44 définissant une flexion angulaire. Ainsi, on pourrait utiliser à cet effet deux ressorts en spirale montés en opposition, ou encore des ressorts placés entre deux plateaux disposés radialement.

Pour sa part, le potentiomètre 50 permet de détector le décalage angulaire entre le plateau de référence 36 et la pièce d'actionnement 44, c'est-à-dire en fait la torsion de la barre 42. Ce potentiomètre 50 donne donc une indication de la force exercée entre la pièce 44 et le boîtier 12. A titre d'exemple, le décalage angulaire peut être de 5° pour une force de 3 kg.

Comme on le verra dans la suite de la description, ces deux potentiomètres permettent, en combinaison avec la barre de torsion 42, de réaliser conformément à bien que le mécanisme réducteur 20 ne le soit pas.

On peut, en additionnant les valeurs données par les deux potentiomètres connaître la position de la pièce 44 par rapport au boîtier 12. Ceci est particulièrement intéressant dans le cadre d'application à la robotique.

Bien entendu, le mécanisme réducteur 20 peut être constitué par tout mécanisme réducteur de type connu présentant un taux de réduction suffisamment élevé pour être compatible avec la vitesse de rotation transmise au rotor 16 du moteur. Comme on l'a déjà mentionné, un tel mécanisme est généralement peu ou pas réversible.

A titre d'exemple non limitatif, on décrira maintenant en se référant aux figures 2a et 2b le fonctionnement du mécanisme réducteur utilisé dans le dispositif représenté sur la figure 1. Ce mécanisme est d'un type connu, communément désigné par l'expression »harmonic drive«.

Comme l'illustrent les figures 1 et 2a, la partie menante 18 comporte une portion 18b formant un chemin de roulement interne elliptique pour les billes 20a d'un roulement à billes dont le chemin de roulement externe est formé sur une couronne 20b, en acier souple, épousant la forme elliptique du chemin de roulement interne. Comme le montre la figure 1, cette couronne 20b présente une denture externe qui est engrenée simultanément selon deux génératrices diamétralement opposées, à la fois sur une denture interne 20c formée sur une couronne fixée à la partie 12b du boîtier et sur une denture interne 20d formée sur la couronne 22a de la partie menée 22.

On voit sur la figure 2b que le nombre de dents de la couronne dentée 20b est différent de celui de la denture 20c formée sur le boîtier, de telle sorte que la rotation du chemin de roulement porté par la portion 18b à l'intérieur de la couronne 20b a pour effet de faire tourner celle-ci à l'intérieur de la denture fixe 20c d'un angle $\alpha$ correspondant au décalage existant entre les dentures pour une rotation donnée de la partie menante 18.

Le nombre de dents de la denture 20d étant par ailleurs identique à celui des dents de la couronne 20b, cette rotation de la couronne 20b conduit à la rotation du même angle $\alpha$ de la partie menée 22.

Il est clair que le taux de réduction d'un tel réducteur est très élevé puisque si le décalage existant entre le nombre de dents des dentures 20b et 20c est seulement d'une dent, à un tour de la partie menante 18 va correspondre une rotation de la partie menée 22 d'un angle $\alpha$ correspondant au pas de la denture 20c. Comme on l'a vu un tel mécanisme est peu ou pas réversible.

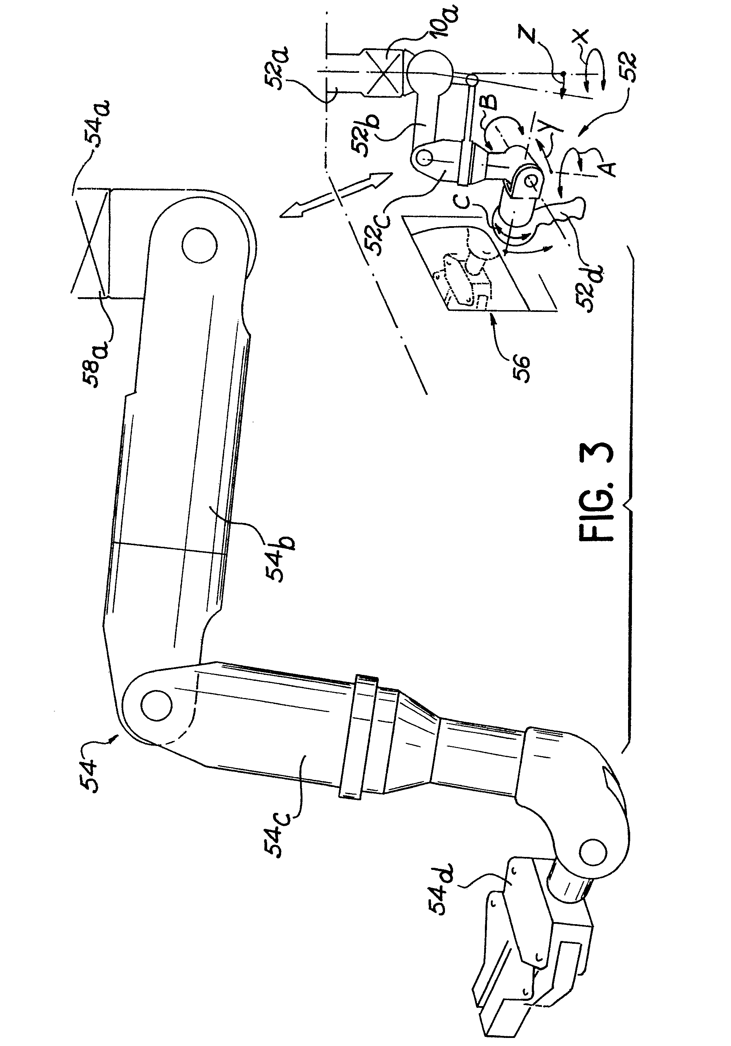

Comme l'illustre en particulier la figure 3, le dispositif selon l'invention peut être utilisé pour contrôler chacun des mouvements d'un télémanipulateur. Ainsi, on a représenté sur cette figure un bras maître miniaturisé 52 commandant à distance un bras esclave de taille normale 54. Le bras maître 52 peut notamment être monté à l'intérieur d'un véhicule sous-marin, le bras esclave 54 étant extérieur à ce véhicule et surveillé soit au travers d'un hublot, soit à l'aide d'une image affichée sur un écran de télévision 56.

Par exemple, le bras maître 52 peut comprendre un support à axe vertical 52a et un bras 52b monté pivotant autour de l'axe vertical du support 52a (mouvement X) et autour d'un axe d'épaule perpendiculaire à cet axe (mouvement Z). Un avant-bras 52c est articulé sur le bras 52b autour d'un axe de coude parallèle à l'axe d'épaule (mouvement Y). L'extrémité de l'avant bras 52c supporte une poignée 52d et peut tourner autour de l'axe de l'avant-bras (mouvement d'azimuth A). La poignée 52d est en outre articulée autour d'un axe perpendiculaire à l'axe de l'avant-bras (mouvement d'élévation B) et autour d'un second axe perpendiculaire au précédent (mouvement de pivotement C). Enfin, la poignée comporte une gâchette commandant les mouvements d'ouverture et de fermeture de la pince du bras esclave.

Le bras esclave 54 comprend alors de la même manière un support à axe vertical 54a, un bras 54b, un avant-bras 54c, et une pince de préhension 54d qui peuvent pivoter les uns par rapport aux autres de la même manière que les parties correspondantes du bras maître.

A chacun des mouvements de positionnement (X, Y et Z) du bras maître et d'orientation (A, B et C) du bras maître correspond un dispositif 10 selon l'invention. Pour simplifier, seul le dispositif 10a contrôlant le pivotement de l'ensemble du bras maître autour de l'axe vertical du support 52a est représenté sur la figure 3. A chacun de ces dispositifs correspond un dispositif d'actionnement sur le bras esclave 54. Ainsi, au dispositif 10a correspond un dispositif 58a qui peut être constitué notamment par un vérin hydraulique. Ce vérin est équipé d'un système de mesure de pression ou de force et d'un détecteur de position tel qu'un potentiomètre. La pression mesurée donne une indication de la charge appliquée au bras esclave.

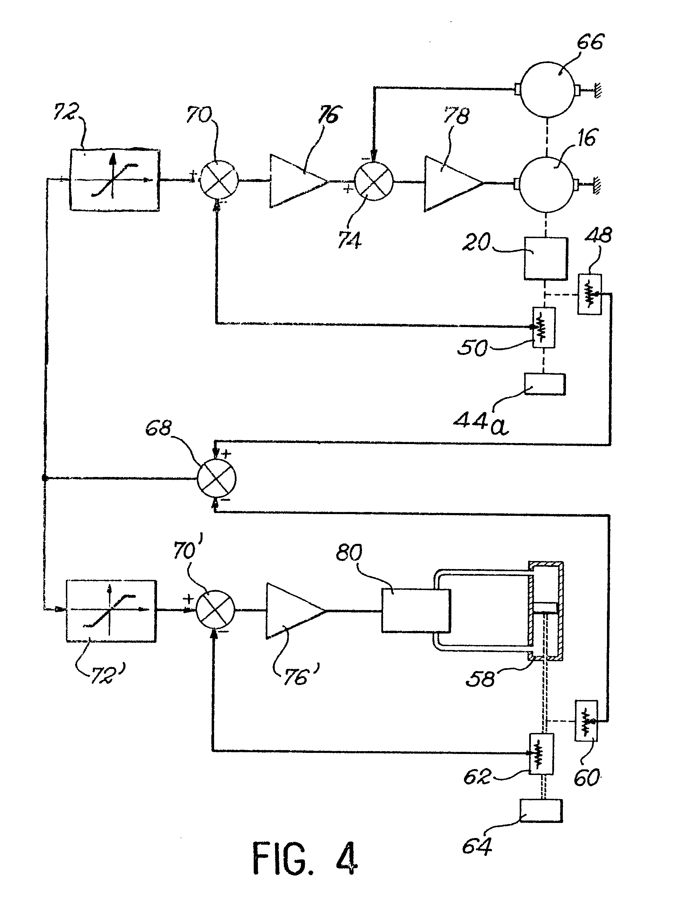

A chacun des ensembles d'actionnement du type 10a—58a correspond un circuit d'asservissement tel que représenté sur la figure 4.

La description qui va suivre est relative à un télémanipulateur maître-esclave à retour d'effort type position-position, mais d'autres schémas position-force ou force-position peuvent être envisagés.

Ainsi, on reconnaît sur cette figure le moteur 16, le mécanisme réducteur 20, les potentiomètres 48 et 50 et le plateau d'actionnement 44a du dispositif 10. On voit aussi le vérin 58 et les potentiomètres de position 60 et d'effort 62 qui lui sont associés, ainsi que la partie mobile 64 commandée par le vérin.

Du côté maître, le moteur 16 est commandé par une génératrice tachymétrique 66.

Les signaux de position délivrés par les potentiomètres 48 et 60 sont injectés dans un soustracteur 68 dont le signal de sortie est injecté, côté maître, dans un soustracteur 70 après être passé dans un limiteur 72. La deuxième borne d'entrée du soustracteur 70 reçoit le signal provenant du potentiomètre d'effort 50. Le signal de sortie du soustracteur 70 est injecté dans un second soustracteur 74, après avoir traversé un amplificateur 76. Le soustracteur 74 compare ce signal au signal provenant de la génératrice 66, pour délivrer un signal de sortie commandant le moteur 16 au travers d'un deuxième amplificateur 78.

Côté esclave, le même type de compraison est effectué entre le signal de sortie du soustracteur 68 et le signal délivré par le potentiomètre d'effort 62. Ainsi, on trouve dans l'ordre un limiteur 72', un soustracteur 70' et un amplificateur 76'. Le signal délivré par cet amplificateur est injecté directement dans une servo-valve 80 commandant le vérin 58.

Le télémanipulateur qui vient d'être décrit en se référant aux figures 3 et 4 fonctionne de la façon suivante.

Si l'on suppose que le bras esclave 54 est équilibré, lorsqu'aucun mouvement correspondant n'est effectué sur le bras maître, le potentiomètre 62 associé au vérin 58 ne délivre aucun signal en l'absence de charge. De même, si le bras maître est équilibré, aucun signal n'apparait en 50. Supposons encore que la position des deux bras soit telle que la différence entre les signaux délivrés par les potentiomètres 48 et 60 (valeur lisible en sortie du soustracteur 68) soit nulle. Si une charge est appliquée sur le bras esclave dans le sens du mouvement considéré, toujours en l'absence de mouvement du bras maître, une variation de pression est détectée par le potentiomètre 62 et transmise à la servo-valve 80, qui commande l'avance du vérin 58 dans le sens dans lequel s'exerce l'effort. Le potentiomètre 60 détecte alors une modification de position.

La différence de position entre le potentiomètre 48 et le potentiomètre 60, qui apparait en sortie du soustracteur 68, provoque:

1) d'une part, le ralentissement et l'arrêt du vérin 58 par annulation du signal de commande de la servo-valve 80, en sortie du soustracteur 70'.
   Il est donc clair que le bras esclave trouve un état d'équilibre tel que la force mesurée par le potentiomètre 62 soit en relation linéaire directe avec la différence de position entre les potentiomètres 48 et 60, dont la valeur est disponible en sortie du soustracteur 68.

2) d'autre part, la mise en rotation du moteur 16. Cette rotation va se traduire par un décalage du potentiomètre 48.
   Il faut remarquer à ce stade, que la différence mesurée en sortie du soustracteur 68 ne va pas évoluer, car le bras esclave commandé par le vérin 58 fléchira pour conserver son état d'équilibre tel que décrit précédemment.

Si l'opérateur tient fermement le bras maître par l'organe de commande 44a, la barre de torsion va se tordre, le détecteur 50 va mesurer une flexion et, au travers du soustracteur 70, va arrêter le mouvement du moteur 16.

Comme pour le bras esclave, on obtient un état d'équilibre tel que la force mesurée par le potentiomètre 50 soit en relation linéaire directs avec la différence de position entre les potentiomètres 48 et 60, traduite en sortie du soustracteur 68.

Le montage étant symétrique, toute force exercée par l'opérateur sur le bras maître en 44a provoquera par un processus identique à celui décrit ci-dessus une action sur le bras esclave. Les limiteurs 72 et 72' ont pout but de limiter en valeur absolue l'amplitude de l'effort exercé par les actionneurs.

Supposons que l'écart mesuré en sortie du soustracteur 68 soit supérieur à la valeur de limitation du limiteur 72 et que l'opérateur exerce sur l'actionneur 44a une force de plus en plus importante. Lorsque la valeur issue du potentiomètre 50 dépasse la valeur de limitation du limiteur 72, le moteur 16 est commandé et le bras 44a recule tant que l'effort est supérieur à la valeur de limitation. En d'autres termes, le bras »décroche« pour tout effort supérieur à l'effort pour lequel le montage est calculé.

Ce limiteur peut être obtenu par un choix judicieux des valeurs de l'électronique provoquant la saturation d'un étage amplificateur par exemple. On remarquera que le circuit de la figure 4 comprend une génératrice tachymétrique 66 dont l'action n'a pas encore été décrite. En fait, il s'agit d'une boucle classiquement bien connue des automaticiens sous le nom de »contre réaction tachymétrique«, dont le but est d'améliorer les performance du système. Cette génératrice n'apparait pas sur la figure 1 pour simplifier le dessin, mais rien n'empêche de l'adjoindre en bout du moteur.

De même, pour la partie esclave, on pourrait ajouter une contre réaction de vitesse pour améliorer les performances.

Le circuit décrit comprend, en 62, un capteur de force sur le mouvement, ce qui est une bonne solution. On pourrait se contenter d'un capteur de pression sur l'actionneur hydraulique. Le système serait alors légèrement moins performant, du fait des frottements du vérin ou du moteur hydraulique.

Le rapport de force entre bras maître et bras esclave peut être réglé électroniquement à une valeur quelconque différente du rapport des forces maximales choisies pour le bras maître ou le bras esclave.

On voit que le dispositif d'actionnement 10 selon l'invention permet ainsi, pour chacun des mouvements du bras maître 52, d'assurer à la fois la commande du déplacement du bras esclave et d'assurer un retour d'effort de ce dernier vers le bras maître.

Bien entendu, l'invention n'est pas limitée à cette application et peut être utilisée de façon générale pour tout contrôle ou commande de mouvement en robotique.

Ainsi, le dispositif d'actionnement selon l'invention peut également être utilisé sur un bras esclave. Dans ce cas, le dispositif selon l'invention est substitué à chacun des dispositifs 58 de la figure 3. L'effort appliqué au bras esclave est détecté par le potentiomètre 50 et comparé à l'effort appliqué au bras maître pour commander le moteur 16 du dispositif correspondant monté sur le bras maître. Une telle application peut notamment permettre de réaliser des télémanipulateurs à câbles ou à rubans de la technique antérieure.

Enfin, un bras maître du type du bras 52 équipé des dispositifs d'actionnement selon l'invention pourrait également être avantageusement utilisé pour commander un bras esclave dit »lourd«. On sait que ce type de bras esclave permettant de manipuler des charges très importantes est actuellement commandé à partir d'une boîte à boutons et ne présente aucun retour de position ou d'effort. Dans ce cas, on ajoute sur le bras esclave existant des potentiomètres permettant de détecter les mouvements de ce bras et on effectue un asservissement position/position bilatérale en comparant la position du bras esclave à celle du bras maître pour commander le déplacement du bras esclave. De façon plus précise, pour chacun des mouvements, on actionne le dispositif selon l'invention correspondant à ce mouvement, ce qui a pour effet de tordre la barre de torsion correspondante. La force ainsi mesurée au niveau du potentiomètre 50 est directement transmise au moteur 16 qui suit ainsi les efforts exercés par l'opérateur. Le déplacement du bras maître qui en résulte est mesuré par le potentiomètre 48. Il est comparé à la position correspondante du bras esclave repérée par le potentiomètre correspondant. Le signal résultant sert à commander le moteur du bras esclave afin de déplacer celui-ci de la même façon que le bras maître.

Compte tenu de la lenteur du déplacement du bras esclave, il peut se produire un décalage entre le bras maître dont la vitesse de déplacement n'est pratiquement pas limitée et le bras esclave. Grâce au système d'asservissement position/position bilatérale, ce décalage peut être compensé par un retour en arrière du bras maître lorsqu'on relâche celui-ci.

Dans le cas de cette utilisation, on réduira la valeur du limiteur 72 pour soulager l'action de l'opérateur. Il ne s'agit toutefois pas alors d'un véritable retour d'effort, puisqu'aucune détection de l'effort n'est réalisée au niveau du bras esclave.

**Revendications**

1. Dispositif d'actionnement (10), comprennant un boîtier (12), un moteur électrique dont le stator (16a) est fixé dans le boîtier, un mécanisme réducteur de vitesse (20) logé dans le boîtier et dont la partie menante (18) est entrainée par le rotor (16b) du moteur électrique et une pièce d'actionnement (44a) externe au boîtier, caractérisé en ce que ladite pièce d'actionnement est reliée à la partie menée (22) du mécanisme réducteur par des moyens de liaison mécanique flexibles angulairement (42) et en ce qu'il comprend des premiers moyens (50) pour détecter un premier decalge angulaire entre la pièce d'actionnement (44a) et ladite partie menée (22), et des deuxièmes moyens (48) pour détecter un deuxième décalage angulaire entre ladite partie menée (22) et le boîtier (12).

2. Dispositif d'actionnement selon la revendication 1, caractérisé en ce que les moyens de liaison mécanique (42), la pièce d'actionnement (44a) et la partie menée (22) présentent un axe de rotation commun.

3. Dispositif d'actionnement selon l'une quelconque des revendications 1 et 2, caractérisé en ce que les moyens de liaison mécanique flexibles angulairement comprennent une barre de torsion.

4. Dispositif d'actionnement selon la revendication 3, caractérisé en ce qu'il comprend de plus un arbre tubulaire rigide (32) disposé coaxilament autour de la barre de torsion (42) pour relier la partie menée (22) du mécanisme réducteur à un plateau de référence (36) dont les faces opposées sont placées respectivement en vis-à-vis d'une surface (12d) du boîtier et d'une surface (44b) de la pièce d'actionnement, les moyens (50, 48) pour détecter le premier et le deuxième décalages angulaires étant montés respectivement entre ladite surface de la pièce d'actionnement et la face correspondante du plateau et entre ladite surface du boîtier et la face correspondante du plateau.

5. Dispositif d'actionnement selon l'une quelconque des revendications 1 et 2, caractérisé en ce que les moyens de liaison mécanique flexibles angulairement comprennent deux ressorts en spirale montés en opposition.

6. Un asservissement de position pour un télémanipulateur maitre-esclave comprenant un bras maître (52) et un bras esclave (54) définissant chacun plusieurs mouvements (A, B, C, X, Y, Z), caractérisé en ce que chaque mouvement d'au moins l'un (52) des bras du télémanipulateur est contrôlé par un dispositif d'actionnement (10) selon l'une quelconque des revendications précédentes, et en ce que ledit asservissement comprend des troisièmes moyens (60) pour détecter la position correspondant au même mouvement de l'autre bras (54), des quatrièmes moyens (68) pour déterminer la différence entre les signaux délivrés par les deuxièmes moyens (48) et les signaux délivrés par les troisièmes moyens (60), et des cinquièmes moyens (70) pour déterminer la différence entre les signaux délivrés par les quatrièmes moyens (68) et les signaux délivrés par les premiers moyens (50), les signaux délivrés par ces cinquièmes moyens (70) servant à commander ledit moteur électrique.

7. Asservissement de position selon la revendication 6, caractérisé en ce qu'il comprend de plus des sixièmes moyens (72) pour limiter à une valeur donnée le niveau des signaux transmis par les quatrièmes moyens (68) aux cinquièmes moyens (70).

8. Asservissement de position selon l'une quelconque des revendications 6 et 7, caractérisé en ce que le dispositif d'actionnement comprend de plus une génératrice tachymétrique (66) associée au moteur électrique, et en ce que l'asservissement comprend de plus des septièmes moyens (74) pour déterminer la différence entre les signaux délivrés par la génératrice (66) et les signaux délivrés par les cinquièmes moyens (70), les signaux délivrés par ces septièmes moyens (74) commandant le moteur électrique.

9. Asservissement de position selon l'une quelconque des revendications 6 à 8, caractérisé en ce que chaque mouvement de l'autre bras (54) est contrôlé par un second dispositif d'actionnement (58) auquel sont associés lesdits troisièmes moyens (60) et des huitièmes moyens (62) pour déterminer l'effort exercé par ce second dispositif d'actionnemt, et en ce que ledit asservissement comprend de plus des neuvièmes moyens (70') pour déterminer la différence entre les signaux délivrés par les quatrièmes moyens (68) et par les huitièmes moyens (62), les signaux délivrés par ces neuvièmes moyens (70') servant à commander le second dispositif d'actionnement (58).

10. Asservissement de position selon la revendication 9, caractérisé en ce qu'il comprend de plus des moyens (72') pour limiter à une valeur donnée le niveau des signaux transmis par les quatrièmes moyens (68) aux neuvièmes moyens (70').

**Patentansprüche**

1. Antriebseinrichtung (10), enthaltend ein Gehäuse (12), einen Elektromotor, dessen Stator (16a) in dem Gehäuse befestigt ist, ein Untersetzungsgetriebe (20), das in dem Gehäuse angeordnet ist und dessen Antriebsteil (18) von dem Rotor des Elektromotors angetrieben ist, und ein außerhalb des Gehäuses angeordnetes Antriebsstück (44a), dadurch gekennzeichnet, daß das genannte Antriebsstück mit dem Abtriebsteil (22) des Untersetzungsgetriebes über eine in Drehrichtung flexible mechanische Verbindungseinrichtung (42) verbunden ist, und daß sie eine erste Einrichtung (50) zum Ermitteln einer ersten Winkelverschiebung zwischen dem Antriebsstück (44a) und dem genannten getriebenen Teil (22) und eine zweite Einrichtung (48) zum Ermitteln einer zweiten Winkelabweichung zwischen dem getriebenen Teil (22) und dem Gehäuse (12) enthält.

2. Antriebseinrichtung nach Anspruch 1, dadurch gekennzeichnet, daß die mechanische Verbindungseinrichtung (42), das Antriebsstück (44a) und das getriebene Teil (22) eine gemeinsame Drehachse haben.

3. Antriebseinrichtung nach einem der Ansprüche 1 und 2, dadurch gekennzeichnet, daß die in Drehrichtung flexible mechanische Verbindungseinrichtung einen Torsionsstab enthält.

4. Antriebseinrichtung nach Anspruch 3, dadurch gekennzeichnet, daß sie weiterhin eine steife tubusförmige Welle (32) enthält, die koaxial um den Torsionsstab (42) angeordnet ist, um das getriebene Teil (22) des Untersetzungsgetriebes mit einer Bezugsplatte (36) zu verbinden, deren entgegengesetzte Seiten einer Fläche (12d) des Gehäuses bzw. einer Fläche (44b) des Antriebsstücks gegenüberstehen, wobei die Einrichtungen (50, 48) zum Ermitteln der ersten und der zweiten Winkelverschiebungen zwischen der Fläche des Antriebsstücks und der entsprechenden Fläche der Platte bzw. zwischen der Fläche des Gehäuses und der entsprechenden Fläche der Platte angeordnet sind.

5. Antriebseinrichtung nach einem der Ansprüche 1 und 2, dadurch gekennzeichnet, daß die in Drehrichtung flexible mechanische Verbindungseinrichtung zwei Spiralfedern enthält, die gegensinnig montiert sind.

6. Nachfolgesteuerung eines Master-Slave-Manipulators, enthaltend einen Master-Arm (52) und einen Slave-Arm (54), die jeweils mehrere Bewegungen (A, B, C, X, Y, Z) ausführen, dadurch gekennzeichnet, daß jede Bewegung wenigstens des einen (52) der Arme des Manipulators von einer Antriebsrichtung (10) nach einem der vorhergehenden Ansprüche gesteuert ist, und daß die Nachfolgesteuerung drei Einrichtungen (60) zum Ermittteln der entsprechenden Position der gleichen Bewegung des anderen Arms (54) enthält, eine vierte Einrichtung (68) aufweist, um die Differenz zwischen den Signalen zu ermitteln, die von der zweiten Einrichtung (48) und von der dritten Einrichtung (60) geliefert werden, und eine fünfte Einrichtung (70) aufweist, um die Differenz zwischen den Signalen zu ermitteln, die von der vierten Einrichtung (68) und der ersten Einrichtung (50) geliefert werden, wobei die Signale, die von der fünften Einrichtung (70) abgeben werden, dazu verwendet werden, den Elektromotor zu steuern.

7. Nachfolgesteuerung nach Anspruch 6, dadurch gekennzeichnet, daß sie darüber hinaus eine sechste Einrichtung (72) enthält, um den Pegel der durch die vierte Einrichtung (68) an die fünfte Einrichtung (70) übertragenen Signale auf einen vorgegebenen Wert zu begrenzen.

8. Nachfolgesteuerung nach einem der Ansprüche 6 und 7, dadurch gekennzeichnet, daß die Antriebseinrichtung weiterhin einen Tachogenerator (66) enthält, der dem Elektromotor zugeordnet ist, und daß die Nachfolgesteuerung darüber hinaus eine siebente Einrichtung (74) enthält, um die Differenz zwischen den Signalen zu ermitteln, die von dem Tachogenerator (66) und der fünften Einrichtung (70) geliefert werden, wobei die von der siebenten Einrichtung (74) abgegebenen Signale den Elektromotor steuern.

9. Nachfolgesteuerung nach einem der Ansprüche 6 bis 8, dadurch gekennzeichnet, daß jede Bewegung des anderen Armes (54) von einer zweiten Antriebseinrichtung (58) gesteuert ist, der die dritte Einrichtung (60) und eine achte Einrichtung (62) zugeordnet sind, um die Wirkung zu ermitteln, die von der zweiten Antriebseinrichtung ausgeübt wird, und daß die Nachfolgesteuerung darüber hinaus eine neunte Einrichtung (70') aufweist, um die Differenz zwischen den Signalen zu ermitteln, die von der vierten Einrichtung (68) und der achten Einrichtung (62) geliefert werden, wobei die von der neunten Einrichtung (70') abgegebenen Signale der Steuerung der zweiten Antriebseinrichtung (58) dienen.

10. Nachfolgesteuerung nach Anspruch 9, dadurch gekennzeichnet, daß sie darüber hinaus eine Einrichtung (72') zum Begrenzen des Pegels der von der vierten Einrichtung (68) zur neunten Einrichtung (70') übertragenen Signale auf einen vorgegebenen Wert enthält.

**Claims**

1. Drive mechanism (10) comprising a casing (12), an electric motor stator (16a) is fixed in the casing, a speed-reduction mechanism (20) fixed in the casing and whose input drive member (18) is actuated by the rotor of the electric motor, and an output drive member (44a) outside the casing, characterized in that said output drive member is connected to the input drive member (22) of the speed reduction mechanism by angularly-flexible linkage means (42), end in that it comprises first means (50) for detecting a first angular difference between the output drive member (44a) and said input drive member (22), and second means (48) for detecting a second angular difference between said input drive means (22) and the casing (12).

2. Drive mechanism according to Claim 1, characterized in that the mechanical linkage means (42), the output drive member (44a) and the input drive member (22) have a common axis of rotation.

3. Drive mechanism according to either of Claims 1 and 2, characterized in that the angularly flexible mechanical linkage means comprise a torsion bar.

4. Drive mechanism according to Claim 3, characterized in that it additionally comprises a rigid tubular shaft (32) disposed coaxially around the torsion bar (42) to connect the input drive member (22) of the reduction mechanism to a reference plate (36) whose opposite faces are respectively located facing a surface (12d) of the casing, and a surface (44b) of the output drive member, the means (50, 48) for detecting the first and second angular differences being respectively mounted between the said surface of the output drive member and the corresponding surface of the plate, and between the said surface of the casing and the corresponding surface of the plate.

5. Drive mechanism according to either of Claims 1 and 2, characterized in that the angularly flexible mechanical linkage means comprise two spiral springs mounted in opposition.

6. Positional servo-system for a master-slave remote manipulator comprising a master arm (52) and a slave arm (54) each defining a plurality of movements (A, B, C, X, Y, Z), characterized in that each movement of at least one arm (52) of the manipulator is controlled by a drive mechanism (10) according to any one of the preceding Claims, and in that said servo system comprises third means (60) for detecting the position corresponding to the same movement of the other arm (54), fourth means (68) for determining the difference between signals delivered by the second means (48) and signals delivered by the third means (60), and fifth means (70) for determining the difference between signals delivered by the fourth means (68) and signals delivered by the first means (50), the signals delivered by said fifth means (70) acting to control said electric motor.

7. Positional servo system according to Claim 6, characterized in that it additionally comprises sixth means (72) for limiting to a predetermined value the level of signals transmitted by the fourth means (68) to the fifth means (70).

**0 080 416**

8. Positional servo system according to either of Claims 6 and 7, characterized in that the drive mechanism additionally comprises a tachymeter signal generator (66) associated with the electric motor, and in that the servo system additionally comprises seventh means (74) for determining the difference between signals delivered by the generator (66) and signals delivered by the fifth means (70), the signals delivered by said seventh means (74) controlling the electric motor.

9. Positional servo system according to any one of Claims 6 to 8, characterized in that each movement of the other arm (54) is controlled by a second drive mechanism (58) with which are associated said third means (60) and eigth means (62) for determining the effort exerted by said second drive mechanism, and in that said servo system additionally comprises ninth means (70') for determining the difference between signals delivered by the fourth means (68) and by the eigth means (62), the signals delivered by said ninth means (70') acting to control the second drive mechanism (58).

10. Positional servo system according to Claim 9, characterized in that it additionally comprises means (72') for limiting to a predetermined value the level of signals transmitted by the fourth means (68) to the ninth means (70').

# FIG. 1

# FIG. 2

FIG. 3

54

58a

54a

54b

54c

54d

52a

52b

52c

52d

10a

56

52

A

B

C

X

Y

Z

0 080 416

FIG. 4